# EUROPEAN PATENT APPLICATION

(11) **EP 4 410 137 A1**
(43) Date of publication of application: **07.08.2024**
(21) Application number: 24155557.2
(22) Date of filing: 02.02.2024
(51) Int. Cl.: A41D 1/00, A41D 13/01, H04B 1/3827

(54) **CONNECTED WEARABLE FOR MACHINE TO HUMAN COMMUNICATION**

(30) Priority: 02.02.2023 US 202363443042 P
(71) Applicant: The Raymond Corporation, Greene, NY 13778 (US)
(72) Inventor: GONCALVES, Fernando D., Vestal, NY, 13850 (US); SCHMITZ, Melissa A., Binghamton NY, 13905 (US); SMITH, Joseph T., Chenango Forks, NY 13746 (US)
(74) Representative: Zacco Sweden AB

(57) **Abstract**

An article of attire (10) for enhanced communication includes an article of attire (10) and a communication device (18). The article (10) has an upper portion (82), an outer surface (90), an inner surface (94), and an interior cavity bounded by the outer surface (90) and the inner surface (94). The communication device (18) has at least one speaker (54), at least one microphone (58), at least one power source (62), at least one processor (66), at least one transmitter (70), and at least one receiver (74). The at least one speaker (54) and the at least one microphone (58) are positioned adjacent to or on the outer surface (90) of the upper portion (82). The communication device (18) is coupled to the article (10). The communication device (18) is configured to receive one or more wireless first inputs (110) from the at least one receiver (74) and deliver the first inputs (110) to the at least one speaker (54) via the at least one processor (66).

## Description

### CROSS-REFERENCES TO RELATED APPLICATIONS

This application claims the benefit and priority of U.S. Provisional Application No. 63/443,042, filed on February 2, 2023, which is incorporated herein by reference in its entirety.

### BACKGROUND

Operators working in various work environments including warehouses, factories, shipping yards, construction sites, and other environments are often required to wear safety attire. A common item of attire is a vest. Vests and other safety attire are often brightly colored to enhance the visibility of the operator working within an environment that can include moving people, vehicles, and products.

Communication with an operator in various work environments can be challenging because various work environments can include, due to the nature of the work, impediments to communication. The impediments to communication may include noise, moving people, moving objects, moving vehicles, moving products, and other various tactile, olfactory, and work-related disturbances.

### BRIEF SUMMARY

The present disclosure describes an article of attire to enhance communication to an operator within a workplace environment. In some embodiments, an article of attire, such as a vest or a watch, is connected to or assembled with a communication device that includes at least one speaker, at least one microphone, at least one power source, and at least one wireless receiver. The assembly of the vest with the communication device may form a "connected wearable" that facilitates human to human communication, human to machine communication, and machine to human communication within a workplace environment.

In some aspects, an article of attire for enhanced communication includes an article of attire and a communication device. The article has an upper portion, an outer surface, an inner surface, and an interior cavity bounded by the outer surface and the inner surface. The communication device has at least one speaker, at least one microphone, at least one power source, at least one processor, at least one transmitter, and at least one receiver. The at least one speaker and the at least one microphone are positioned adjacent to or on the outer surface of the upper portion. The at least one power source, the at least one processor, the at least one transmitter, and the at least one receiver are attached to the article. The communication device is configured to receive at least one wireless first input from the receiver and deliver the at least one first input to the at least one speaker via the at least one processor.

In some aspects, the communication device is configured to receive one or more second inputs from the at least one microphone and deliver the second inputs to the at least one transmitter via the at least one processor. In some aspects, the at least one transmitter is configured to transmit one or more second inputs wirelessly from the at least one transmitter. In some aspects, the at least one transmitter is configured to transmit the first input to a receiving device on the IoT (the "Internet of Things") network, the Bluetooth^{®} network, or another network. In some aspects, the upper portion includes a collar configured to surround a neck of an operator, wherein the at least one speaker is positioned adjacent to or on the collar. In some aspects, the at least one power source includes a storage cell that is configured to store electrical power, wherein the at least one power source is configured to provide electrical power to the at least one microphone, the at least one speaker, the at least one receiver, the at least one transmitter, and the at least one processor. In some aspects, the communication device includes at least one port, wherein the at least one port is configured to receive and deliver one or more third inputs to or from the at least one processor or electrical power to or from the at least one power source.

In some aspects, the receiver is configured to receive first inputs from an alert system, an inventory tracking system, a contact avoidance system, a preventative maintenance system, or an electromagnetic field monitoring system. In some aspects, the communication device further comprises at least one tactile feedback device. In some aspects, the at least one tactile feedback devices are configured to vibrate and are arranged around the collar such that when a first tactile feedback device vibrates a first object is nearby in a first direction, and when a second tactile feedback device vibrates a second object is nearby in a second direction.

In some aspects, a method provides enhanced communication using a communication system assembled to an article of attire. The method includes providing an article of attire with a body having an upper portion with a collar. The method includes providing a communication device having at least one speaker, at least one microphone, at least one power source, at least one processor, at least one transmitter, and at least one receiver, and the communication device attached to the article such that the at least one speaker and the at least one microphone are positioned on or adjacent to the collar, and the at least one power source, the at least one processor, the at least one transmitter, and the at least one receiver are adjacent to or within the body. At least one first input is received wirelessly by the at least one receiver. The method includes delivering the first input to the at least one processor and converting the first input into one or more second outputs by the at least one processor. The second input is delivered from the at least one processor to the at least one speaker. One or more third inputs are received from the at least one microphone and delivered to the at least one processor. The at least one processor converts the third input into one or more fourth inputs, which are delivered to the at least one transmitter. The at least one transmitter transmits the fourth input wirelessly.

In some aspects, the fourth input is received by a voice picking system connected to a Bluetooth^{®} network. In some aspects, the first input is generated by an alert system. In some aspects, the first input is generated by an inventory tracking system. In some aspects, the first input is generated by an electromagnetic field monitoring system. In some aspects, the first input is generated by a contact avoidance program. In some aspects, the first input is generated by a preventative maintenance program. In some aspects, the first input is delivered by a vehicle transmitter connected to a vehicle, such as a forklift or hand truck. In some aspects, the fourth input is delivered to a vehicle receiver connected to the vehicle. In some aspects, the fourth input directs the vehicle to enable the driving of the vehicle.

In some aspects, a system provides for enhanced communication. The system including a communication device having at least one speaker, at least one microphone, at least one power source, at least one processor, at least one transmitter, and at least one receiver; an electromagnetic field monitoring system; and a vehicle having a vehicle transmitter and a vehicle receiver. The communication device is configured to receive at least one signal and transmit the at least one signal to the at least one speaker via the at least one processor. The communication device is configured to receive the at least one signal and transmit the at least one signal to the vehicle receiver. The communication device is configured to receive the at least one signal from the electromagnetic field monitoring system and the communication device is configured to transmit the at least one signal to the electromagnetic field monitoring system. The vehicle receiver is configured to receive the at least one signal from the electromagnetic field monitoring system and the vehicle transmitter is configured to transmit the at least one signal to the electromagnetic field monitoring system. The vehicle receiver is configured to receive the at least one signal from the communication device and the vehicle transmitter is configured to transmit the at least one signal to the communication device. The electromagnetic field monitoring system is configured to receive the at least one signal from the vehicle transmitter and the electromagnetic field monitoring system is configured to transmit the at least one signal to the vehicle receiver. The electromagnetic field monitoring system is configured to receive the at least one signal from the communication device and the electromagnetic field monitoring system is configured to transmit the at least one signal to the communication device. The foregoing and other aspects and advantages of the disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the disclosure.

According to one aspect, the present disclosure provides an article of attire for enhanced communication. The article of attire having an upper portion, an outer surface, an inner surface, and an interior cavity bounded by the outer surface and the inner surface; and a communication device having at least one speaker, at least one microphone, at least one power source, at least one processor, at least one transmitter, and at least one receiver. The at least one speaker and the at least one microphone are positioned adjacent to or on the outer surface of the upper portion. The at least one power source, the at least one processor, the at least one transmitter, and the at least one receiver are coupled to the article. The communication device is configured to receive one or more wireless first inputs from the at least one receiver and deliver the first inputs to the at least one speaker via the at least one processor.

In some embodiments, the communication device is configured to receive at least one second input from the at least one microphone and deliver the at least one second input to the transmitter via the at least one processor. The at least one transmitter is configured to transmit the at least one second input wirelessly from the at least one transmitter. The at least one transmitter is configured to transmit the at least one second input to a wireless receiver connected to a communication network.

In some embodiments, the upper portion includes a collar configured to at least partially surround a neck of an operator, wherein the at least one speaker is positioned adjacent to or on the collar. The communication device further comprises at least one tactile feedback device arrayed radially around an axis of the collar.

In some embodiments, the at least one power source includes a storage cell that is configured to store electrical power, and wherein the at least one power source is configured to provide electrical power to the at least one microphone, the at least one speaker, the at least one receiver, the at least one transmitter, and the at least one processor. The communication device includes at least one port, wherein the at least one port is configured to receive and deliver one or more third inputs to or from the at least one processor or electrical power to or from the at least one power source.

In some embodiments, the at least one receiver is configured to receive at least one first input from an alert system, an inventory tracking system, a contact avoidance system, a preventative maintenance system, or an electromagnetic field monitoring system. The at least one tactile feedback device is configured to vibrate and is arranged around the collar such that when a first object is nearby in a first radial direction, a first tactile feedback device vibrates more than a second tactile feedback device, and when a second object is nearby in a second radial direction, the second tactile feedback device vibrates more than the first tactile feedback device.

According to another aspect, the present disclosure provides a method for providing enhanced communication using a communication system assembled to an article of attire. The method including, providing an article of attire with a body having an upper portion with a collar. Providing a communication device having at least one speaker, at least one microphone, at least one power source, at least one processor, at least one transmitter, and at least one receiver, the communication device attached to the article such that the at least one speaker and the at least one microphone are positioned on or adjacent to the collar, and the at least one power source, the at least one processor, the at least one transmitter, and the at least one receiver are adjacent to or within the body. Receiving wirelessly one or more first inputs from the at least one receiver. Delivering the first input to the at least one processor. Converting the first input into one or more second inputs by the at least one processor. Delivering the second input to the at least one speaker from the at least one processor. Receiving one or more third inputs from the at least one microphone. Delivering the third input to the at least one processor. Converting the third input into one or more fourth inputs by the at least one processor. Delivering the fourth input to the at least one transmitter. Transmitting the fourth input wirelessly.

In some embodiments, the fourth input is received by a voice picking system connected to a Bluetooth^{®} network.

In some embodiments, the first input is generated by an alert system.

In some embodiments, the first input is generated by an inventory tracking system.

In some embodiments, the first input is generated by an electromagnetic field monitoring system.

In some embodiments, the first input is generated by a contact avoidance program.

In some embodiments, the first input is generated by a preventative maintenance program.

In some embodiments, the first input is delivered by a vehicle transmitter connected to a vehicle, such as a forklift or a hand truck.

In some embodiments, the fourth input is delivered to a vehicle receiver connected to the vehicle.

In some embodiments, the fourth input directs the vehicle to enable the driving of the vehicle.

### BRIEF DESCRIPTION OF DRAWINGS

The invention will be better understood and features, aspects and advantages other than those set forth above will become apparent when consideration is given to the following detailed description thereof. Such detailed description makes reference to the following drawings.
Fig. 1 is a schematic representation of a communication device attached to a vest and a material handling vehicle according to aspects of the present disclosure;
Fig. 2 is a schematic view of a warehouse with various objects having communication systems including a vest, a pallet, a loading dock, an electromagnetic field emitter, and a broadcasting location according to aspects of the present disclosure;
Fig. 3 is a schematic representation of a detailed front view of the communication device attached to the vest of Fig. 1 according to aspects of the present disclosure;
Fig. 4 is schematic representation of a communication device suitable for use with the vest of Fig. 1 according to aspects of the present disclosure;
Fig. 5 is a schematic representation of a pair of speakers and a pair of tactile feedback devices attached to a collar suitable for use with the vest of Fig. 1 according to aspects of the present disclosure; and
Fig. 6 is a schematic representation of a communication system for suitable use with the communication device of Fig. 4 according to aspects of the present disclosure.

### DETAILED DESCRIPTION

Before any aspects of the invention are explained in detail, it is to be understood that the invention is not limited in its application to the details of construction and the arrangement of components set forth in the following description or illustrated in the following drawings. The invention is capable of other aspects and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

It is also to be appreciated that a variety of safety attire is suitable for a wide variety of different environments and situations beyond simply factories, warehouses, and construction sites. It will be apparent to those of skill in the art that the present disclosure is not limited to any specific attire and can also be provided with various other types of attire such as belts, hats, pants, sleeves, shirts, headbands, watches, or wrist bands. In addition, it will be apparent to those of skill in the art that the present disclosure is not limited to any specific communication device and can also be provided with various other types of communication devices such as integrated communication devices, communication devices with elements that are connected to one another wirelessly.

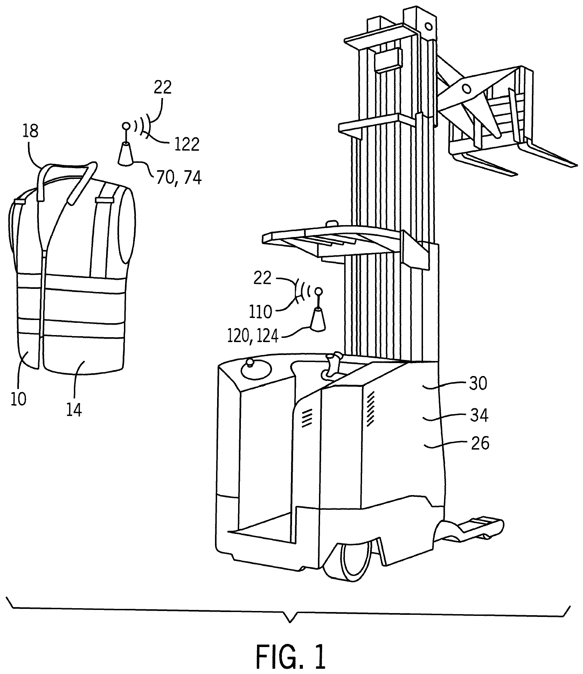

In the illustrated embodiment of Fig. 1, an article of attire 10 for enhanced communication constructed in accordance with the present invention is shown. In some embodiments, the article of attire 10 can be a vest 14, or a watch (not shown). Since wearing attire 10 generally and vests 14 specifically can be commonly mandatory in many work environments, attaching a communication device 18 to the vest 14 can provide a way to reinforce that the communication device 18 remains worn by an operator throughout a work shift. The communication device 18 can be utilized to wirelessly send and receive signals 22 from both humans and machines inside the work environment and outside the work environment. In some embodiments, the machine sending and receiving signals 22 from the communication device 18 can be a forklift or other vehicle 26. In some embodiments, the machine or vehicle 26 sending and receiving signals 22 from the communication device 18 can utilize the IoT network. The article of attire 10 with the communication device 18 provides a way for an operator to both send and receive information while operating in a busy and noisy work environment. This increase in sending and receiving information in an efficient and hands-free way allows the operator to perform their work tasks in a more seamless fashion.

In some embodiments, information sent by signals 22 from vehicles 26 to the communication device 18 can include potential indications and data from a contact avoidance program connected to the vehicle 26. For example, the contact avoidance program connected to the vehicle 26 may identify that the vehicle 26 is entering within a pre-set distance from the operator, and the vehicle 26 may send a wireless signal 22 to the communication device 18 to indicate to the operator that the vehicle 26 is within the radius of the pre-set distance.

Still referring to Fig. 1, in some embodiments, information sent by signals 22 from vehicle 26 to the communication device 18 can include potential indications and data from an alert program, such as an object detection system alert program, connected to the vehicle 26. For example, the alert program connected to the vehicle 26 may identify that adverse weather may be reaching the factory soon, and the vehicle 26 may send a wireless signal 22 to the communication device 18 to indicate to the operator of the adverse weather, an indication that the operator may have missed from other available sources of communication.

In some embodiments, information sent by signals 22 from vehicle 26 to the communication device 18 can include preventative maintenance indications and data from a preventative maintenance program connected to the vehicle 26. For example, the preventative maintenance program connected to the vehicle 26 may identify that the vehicle will be due for routine service, and the vehicle 26 may send a wireless signal 22 to the communication device 18 to advise the operator that the vehicle 26 requires routine maintenance.

In some embodiments, information sent by signals 22 from vehicle 26 to the communication device 18 can include alerts from an object detection system alert program connected to the vehicle 26. For example, the object detection system alert program connected to the vehicle 26 may identify that a pedestrian is nearby the vehicle 26, and the vehicle 26 may send wireless signal 22 to the communication device 18 to alert the operator that a pedestrian is near the vehicle 26. In another example, the object detection system alert program connected to the vehicle 26 may identify that a human wearing communication device 18 is nearby the vehicle 26, and the vehicle may send wireless signal 22 to the communication device 18 to alert the human wearing communication device 18 that the vehicle 26 is nearby.

In some embodiments, information sent by signals 22 from vehicle 26 to the communication device 18 can include alerts from a device status alert program connected to the vehicle 26. For example, the device status alert program connected to the vehicle 26 may identify that a communication device 18 is low on charge and the vehicle 26 may send wireless signal 22 to the communication device 18 to alert the operator that their communication device 18 is low on charge and that the communication device 18 will need to be recharged. In another example, communication device 18 can include alerts from communication device 18 to a user indicating that the charge of the communication device 18 is low and that the communication device 18 will need to be recharged.

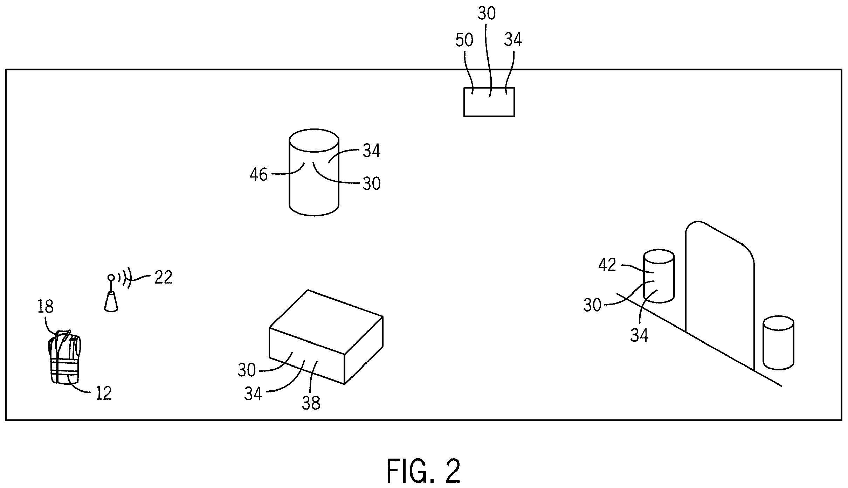

In the illustrated embodiment of Fig. 2, the communication device 18 can be configured to send and receive signals 22 wirelessly from signaling antennas 30 or to receiving antennas 34 attached to a pallet 38, to a loading dock 42, to an electromagnetic field monitor 46, or another broadcasting location 50. In some embodiments, each pallet 38 in a warehouse may have an associated signaling antenna 30 that can send a signal 22 to the communication device 18 about the inventory stored on the associated pallet 38 by employing an inventory tracking system, such as an "RTLS" program, or a real-time location system program. For example, the pallet 38 can send a signal 22 to the communication device 18 that a specific type of bolt is stored on the pallet 38.

In some embodiments, each loading dock 42 in a warehouse may have an associated signaling antenna 30 that can send a signal 22 to the communication device 18 when the communication device 18 is within a pre-set distance of the loading dock 42. In some embodiments, each charging station or other areas (not shown) in a warehouse may have an associated signaling antenna 30 that can send a signal 22 to the communication device 18 when the communication device 18 is within a pre-set distance of the charging station or other areas.

Still referring to Fig. 2, in some embodiments, each source of electromagnetic radiation in a warehouse may have an associated electromagnetic field monitor 46 that can include a signaling antenna 30 that can send a signal 22 to the communication device 18 when the communication device 18 is within a pre-set distance of the electromagnetic field monitor 46. In some embodiments, the electromagnetic field monitor 46 can employ an electromagnetic field monitoring program, such as iWarehouse^{®} FieldSense, by The Raymond Corporation.

In some embodiments, each broadcasting location 50 in a warehouse may have an associated signaling antenna 30 that can send a signal 22 to the communication device 18 when the communication device 18 is within a pre-set distance of the broadcasting location 50. In some embodiments, each of the broadcasting locations 50 can provide a way to communicate between the communication device 18 and other operators or other staff in the warehouse. In some embodiments, the broadcasting location 50 can employ a wireless communication network, such as BlueTooth^{®}, WiFi^{®}, cellular, and/or other wireless network protocols (e.g., through one or more gateways, wireless access points, etc.). For example, a warehouse manager utilizing an electromagnetic field monitor 46, such as iWarehouse^{®} FieldSense, may send a signal 22 to vehicle 26. The vehicle 26 could then relay the message via signal 22 to the paired communication device 18, thereby alerting the user of the warehouse manager's message.

Still referring to Fig. 2, in some embodiments, signals 22 sent between the communication device 18 and the broadcasting location 50, which can include verbal instructions, can be used to provide prompts to the operator about which tasks to perform next. In some embodiments, signals 22 sent between the communication device 18 and the broadcasting location 50 can be used to provide prompts to the operator about what items to pick up next or to provide feedback about driving behavior. In some embodiments, the at least one microphone 58 can be utilized to enable other voice commands for other operators or technicians to be prompted about the next pick-up location. In some embodiments, the at least one microphone 58 can be utilized to send voice commands to the operator's vehicle 26 as well, such as "stop." In addition, the communication device 18 can indicate the location of an operator even when the operator is not near the operator's vehicle 26, utilizing BlueTooth^{®} for instance. In another embodiment, the at least one microphone 58 can be utilized to send voice-to-text messages. The voice-to-text messages, for example, could be sent via signal 22 from communication device 18 via an electromagnetic field monitor 46, such as iWarehouse^{®} FieldSense, to a server utilized by the warehouse.

In some embodiments, the broadcasting location 50 can be connected to a picking program, such as known voicepicking applications. In some embodiments, signals 22 sent between the communication device 18 and the broadcasting location 50 can be used to identify to the operator which vehicle 26 that the operator is authorized or approved to operate next. That is, voice recognition may be used to "Login" to a specific one of the vehicles 26. In some embodiments, signals 22 sent between the communication device 18 and the broadcasting location 50 can be used to send messages from a first operator to a second operator based upon whether the communication device 18 of the second operator is within a pre-set distance from the communication device 18 of the first operator.

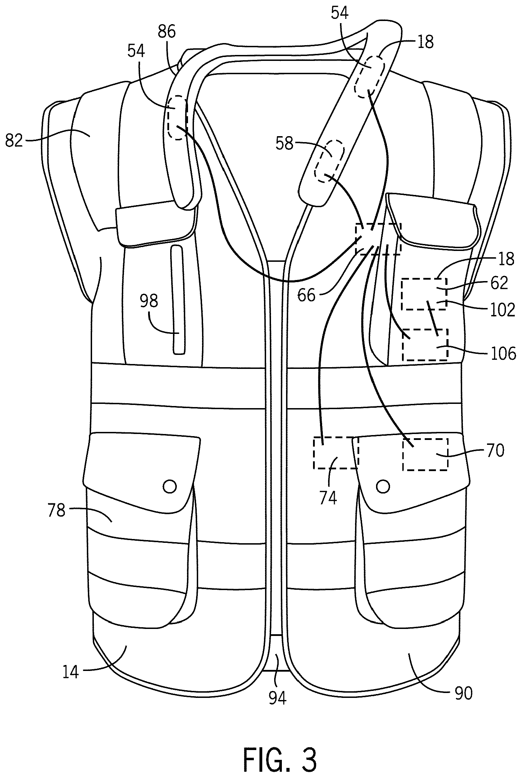

In the illustrated embodiment of Fig. 3, the communication device 18 can include one or more speakers 54, one or more microphones 58, one or more power sources 62, one or more processors 66, one or more transmitters 70, and one or more receivers 74. In some embodiments, the vest 14 can include a vest body 78, an upper portion 82 having a collar 86 configured to surround a neck of an operator, an outer surface 90, an inner surface 94, and an interior cavity 98 bounded by the outer surface 90 and the inner surface 94. In some embodiments, two or more speakers 54 can provide enhanced situational awareness to the wearer of the article 10 by localizing the sound close to the operator's head. The speakers 54 may also provide stereo sound to the operator which can be used to inform direction in certain situations. In this way, the article can communicate directional sound to the operator via stereo sound without having the operator wear headphones to discriminate the direction of an object. In some embodiments, the speakers 54 and the microphone 58 can be positioned adjacent to or on the outer surface 90 of the upper portion 82. In some embodiments, portions of the communication device 18 are woven or sewn into the vest body 78. In some embodiments, the speakers 54 and the microphone 58 can be positioned adjacent to or on the collar 86. By so doing, the speakers 54 and the microphone 58 do not cover the ears of the operator. In some embodiments, the power source 62, the processor 66, the transmitter 70, and the receiver 74 can be positioned or sewn within the interior cavity 98. In some embodiments, the power source 62, the processor 66, the transmitter 70, and the receiver 74 can be adjacent to or within the vest body 78.

The power source 62 can include a storage cell 102 that is configured to store electrical power. The power source 62 can be configured to provide electrical power to the microphone 58, the speakers 54, the receiver 74, the transmitter 70, and the processor 66. In some embodiments the communication device 18 can include one or more ports 1 06. In some embodiments, the port 106 can be configured to receive and deliver signals 22 to or from the processor 66. In some embodiments, the port 106 can receive or deliver electrical power to or from the power source 62.

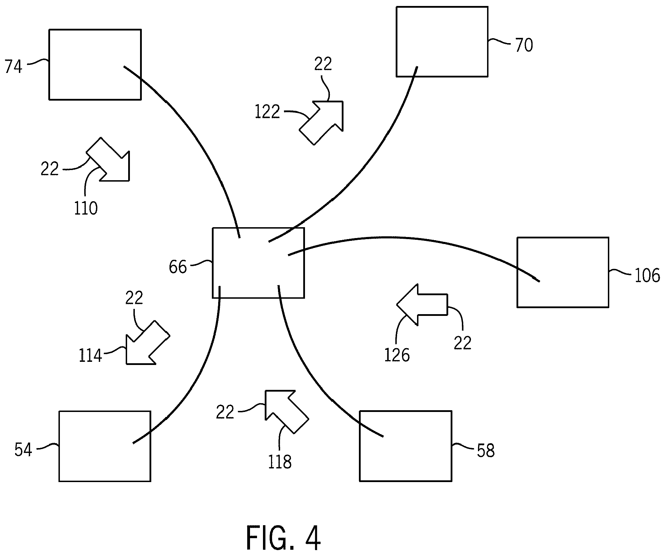

In the illustrated embodiment of Fig. 4, the communication device 18 can be configured to receive one or more wireless first inputs 110 as signals 22 from the receiver 74 and deliver the first inputs 110 to the processor 66. The processor 66 can convert the first input 110 into one or more second inputs 114 and delivers the second input 114 to the speakers 54. The speakers 54 can be configured to convert the second input 114 into an audible sound that the operator may hear. The operator may produce an audible sound, and the microphone 58 can be configured to receive the audible sound and convert the audible sound into a signal 22 as one or more third inputs 118. The one or more third inputs 118 can be delivered to the processor 66. The processor 66 can be configured to convert the third input 118 into a signal 22 as one or more fourth inputs 122. The one or more fourth inputs can be delivered to the transmitter 70. The transmitter 70 can be configured to transmit the fourth input 122 as a signal 22 wirelessly. The transmitter 70 can be configured to transmit the fourth input 122 as a signal 22 to the various receiving antennas 34 connected to the IoT network, the BlueTooth^{®} network, or another network. For example, the BlueTooth° network could be used in conjunction with the transmitters 70 of surrounding vehicles 26 to provide an indication that another vehicle 26 is within a certain range. In addition, the BlueTooth^{®} network used in conjunction with the transmitters 70 of specific vehicles 26 can provide a way to indicate to the operator which of the other vehicles 26 are nearby. Referring to Fig. 3, in some embodiments, the port 106 can be configured to receive and deliver signals 22 as one or more fifth inputs 126 to or from the processor 66.

Referring back to Fig. 1, in some embodiments, the first input 110 can be delivered by a signaling antenna 30 connected to the vehicle 26, such as a forklift or hand truck. In some embodiments, the fourth input 122 can be delivered to a receiving antenna 34 connected to the vehicle 26. In some embodiments, the fourth input 122 directs the vehicle 26 to enable or authorize the operator to drive or login to the vehicle 26.

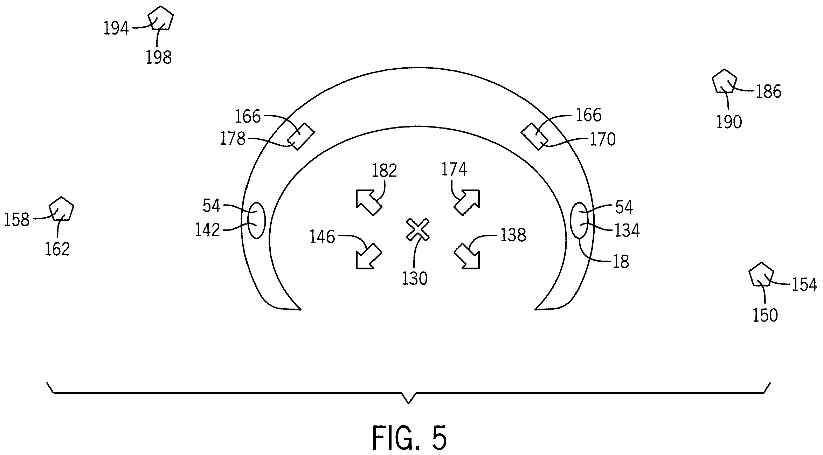

In the illustrated embodiment of Fig. 5, the communication device 18 can be configured to have two or more of the speakers 54 radially arrayed around an axis 130 of the collar 86 to surround a head of the operator. In some embodiments, a first speaker 134 can be arrayed in a first radial direction 138 with respect to the axis 130, and a second speaker 142 can be arrayed in a second radial direction 146 with respect to the axis 130. In some embodiments, the second input 114 can be configured to provide an indication of a nearby first object 150 that represents a potential obstacle that is located radially in a first position 154 that is radially closer to the first speaker 134 than the second speaker 142, and the second input 114 can be configured to produce a louder sound out of the first speaker 134 than the second speaker 142. By so doing, the operator can be provided an extra degree of auditory feedback to establish the direction of the first object 150 that represents a potential obstacle. In some embodiments, the second input 114 can be configured to provide an indication of a nearby second object 158 that represents a potential obstacle that is located radially in a second position 162 that is radially closer to the second speaker 142 than the first speaker 134, and the second input 114 can be configured to produce a louder sound out of the second speaker 142 than the first speaker 134.

In some embodiments, the communication device 18 can be configured to have one or more tactile feedback devices 166 radially arrayed around the axis 130 of the collar 86 (see Fig. 3) to surround a head of the operator. In some embodiments, the tactile feedback devices 166 can be configured to vibrate. In some embodiments, a first tactile feedback device 170 can be arrayed in a third radial direction 174 with respect to the axis 130, and a second tactile feedback device 178 can be arrayed in a fourth radial direction 182 with respect to the axis 130. In some embodiments, the second input 114 can be configured to provide an indication of a nearby third object 186 that represents a potential obstacle that is located radially in a third position 190 that is radially closer to the first tactile feedback device 170 than the second tactile feedback device 178, and the second input 114 can be configured to vibrate the first tactile feedback device 170 more than the second tactile feedback device 178. By so doing, the operator can be provided an extra degree of ta ctile feedback to establish the direction of the third obj ect 186 that represents a potential obstacle. In some embodiments, the second input 114 can be configured to provide an indication of a nearby fourth object 194 that represents a potential obstacle that is located radially in a fourth position 198 that is radially closer to the second tactile feedback device 178 than the first tactile feedback device 170, and the second input 114 can be configured to vibrate the second tactile feedback device 178 more than the first tactile feedback device 170.

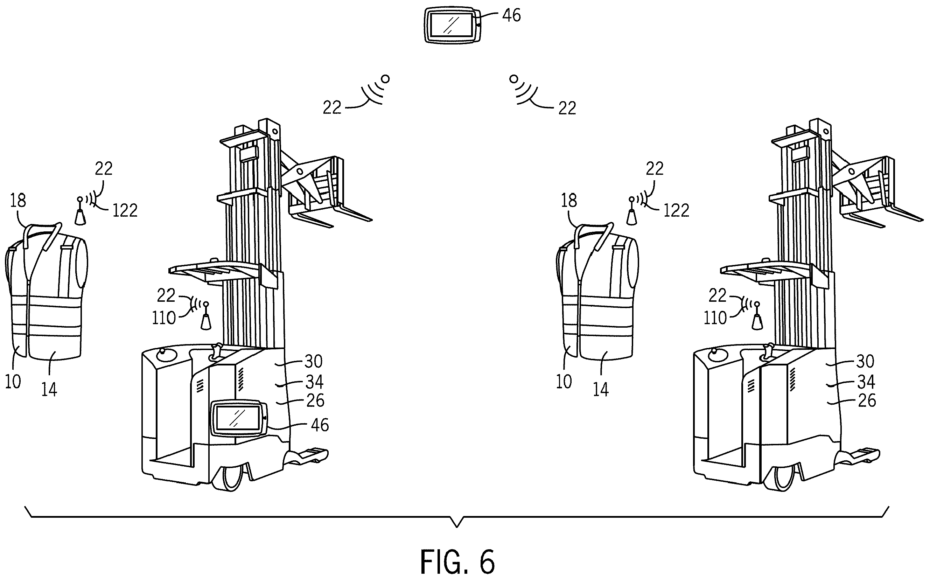

In the illustrated embodiment of Fig. 6, the communication system can be configured to have a network of communication utilizing the communication device 18, a vehicle 26, and an electromagnetic field monitor 46 all configured to send and receive signals 22. The communication device 18 can be utilized to wirelessly send and receive signals 22 from both humans and machines inside the work environment and outside the work environment. In some embodiments, the machine sending and receiving signals 22 from the communication device 18 can be a forklift or other vehicle 26. In some embodiments, the electromagnetic field monitor 46 sends and receives signals 22 from the communication device 18. In some embodiments, the electromagnetic field monitor 46 sends and receives signals 22 from the vehicle 26. In some embodiments, the communication device 18 sends and receives signals 22 from another communication device 18. This communication system configured to enhance the human to human communication, human to machine communication, and machine to human communication within a workplace environment.

In some embodiments a system includes a communication device 18 having at least one speaker 54, at least one microphone 58, at least one power source 62, at least one processor 66, at least one transmitter 70, and at least one receiver 74; an electromagnetic field monitoring system 46; and a vehicle 26 having a vehicle transmitter 120 and a vehicle receiver 124. The communication device 18 is configured to receive at least one signal 22 and transmit the at least one signal 22 to the at least one speaker 54 via the at least one processor 66. The communication device 18 is configured to receive the at least one signal 22 and transmit the at least one signal 22 to the vehicle receiver. The communication device 18 is configured to receive the at least one signal 22 from the electromagnetic field monitoring system 46 and the communication device 18 is configured to transmit the at least one signal 22 to the electromagnetic field monitoring system 46. The vehicle receiver is configured to receive the at least one signal 22 from the electromagnetic field monitoring system 46 and the vehicle transmitter is configured to transmit the at least one signal 22 to the electromagnetic field monitoring system 46. The vehicle receiver is configured to receive the at least one signal 22 from the communication device 18 and the vehicle transmitter is configured to transmit the at least one signal 22 to the communication device 18. The electromagnetic field monitoring system 46 is configured to receive the at least one signal 22 from the vehicle transmitter and the electromagnetic field monitoring system 46 is configured to transmit the at least one signal 22 to the vehicle receiver. The electromagnetic field monitoring system 46 is configured to receive the at least one signal 22 from the communication device 18 and the electromagnetic field monitoring system 46 is configured to transmit the at least one signal 22 to the communication device 46.

For certain types of vehicles, there are training requirements imposed by various government agencies' laws, rules, and regulations. For example, the United States Department of Labor Occupational Safety and Health Administration (OSHA) imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel. By utilizing the vest with enhanced communication abilities, the operator can operate the material handling vehicle with more feedback from the environment.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

Thus, while the invention has been described in connection with particular embodiments and examples, the invention is not necessarily so limited, and that numerous other embodiments, examples, uses, modifications and departures from the embodiments, examples and uses are intended to be encompassed by the claims attached hereto. The entire disclosure of each patent and publication cited herein is incorporated by reference, as if each such patent or publication were individually incorporated by reference herein.

Various features and advantages of the invention are set forth in the following claims.

## Claims

1. An article of attire (10) for enhanced communication, the article of attire (10) comprising:
an article of attire (10) having an upper portion (82), an outer surface (90), an inner surface (94), and an interior cavity (98) bounded by the outer surface (90) and the inner surface (94); and
a communication device (18) having at least one speaker (54), at least one microphone (58), at least one power source (62), at least one processor (66), at least one transmitter (70), and at least one receiver (74),
wherein the at least one speaker (54) and the at least one microphone (58) are positioned adjacent to or on the outer surface (90) of the upper portion (82),
wherein the at least one power source (62), the at least one processor (66), the at least one transmitter (70), and the at least one receiver (74) are coupled to the article (10), and
wherein the communication device (18) is configured to receive one or more wireless first inputs from the at least one receiver and deliver the first inputs (110) to the at least one speaker (54) via the at least one processor (66).

2. The article of attire (10) of claim 1, wherein the communication device (18) is configured to receive at least one second input (114) from the at least one microphone (58) and deliver the at least one second input (114) to the transmitter (70) via the at least one processor (66);
the at least one transmitter (70) is configured to transmit the at least one second input (114) wirelessly from the at least one transmitter- (70); and
the at least one transmitter (70) is configured to transmit the at least one second input (114) to a wireless receiver (74) connected to a communication network.

3. The article of attire (10) according to any of the proceeding claims, wherein the upper portion includes a collar (86) configured to at least partially surround a neck of an operator, wherein the at least one speaker (54) is positioned adjacent to or on the collar (86); and
the communication device (18) further comprises at least one tactile feedback device (166) arrayed radially around an axis (130) of the collar (86).

4. The article of attire (10) according to any of the proceeding claims, wherein the at least one power source (62) includes a storage cell (102) that is configured to store electrical power, and wherein the at least one power source (62) is configured to provide electrical power to the at least one microphone (58), the at least one speaker (54), the at least one receiver (74), the at least one transmitter (70), and the at least one processor (66); and
the communication device (18) includes at least one port (106), wherein the at least one port (106) is configured to receive and deliver one or more third inputs (118) to or from the at least one processor (66) or electrical power to or from the at least one power source (62).

5. The article of attire (10) according to any of the proceeding claims, wherein the at least one receiver (74) is configured to receive at least one first input (110) from an alert system, an inventory tracking system, a contact avoidance system, a preventative maintenance system, or an electromagnetic field monitoring system; and
at least one tactile feedback device (166) is configured to vibrate and is arranged around the collar such that when a first object (150) is nearby in a first radial direction (138), a first tactile feedback device (170) vibrates more than a second tactile feedback (178) device, and when a second object is nearby in a second radial direction (146), the second tactile feedback device (178) vibrates more than the first tactile feedback device (170).

6. A method for providing enhanced communication using a communication system assembled to an article of attire (10), the method comprising:
providing an article of attire (10) with a body (78) having an upper portion (82) with a collar (86);
providing a communication device (18) having at least one speaker (54), at least one microphone (58), at least one power source, at least one processor, at least one transmitter, and at least one receiver, the communication device (18) attached to the article (10) such that the at least one speaker (54) and the at least one microphone (58) are positioned on or adjacent to the collar (86), and the at least one power source (62), the at least one processor (66), the at least one transmitter (70), and the at least one receiver (74) are adjacent to or within the body (78);
receiving wirelessly one or more first inputs (110) from the at least one receiver (74);
delivering the first input (110) to the at least one processor (66);
converting the first input (110) into one or more second inputs (114) by the at least one processor (66);
delivering the second input (114) to the at least one speaker (54) from the at least one processor (66);
receiving one or more third inputs (118) from the at least one microphone (58);
delivering the third input (118) to the at least one processor (66);
converting the third input (118) into one or more fourth inputs (122) by the at least one processor (66);
delivering the fourth input (122) to the at least one transmitter (70); and
transmitting the fourth input (122) wirelessly.

7. The method of claim 6, wherein the fourth input (122) is received by a voice picking system connected to a Bluetooth^{®} network.

8. The method of claim 6 or 7, wherein the first input (110) is generated by an alert system.

9. The method of claim 6 or 7, wherein the first input (110) is generated by an inventory tracking system.

10. The method of claim 6 or 7, wherein the first input (110) is generated by an electromagnetic field monitoring system.

11. The method of claim 6 or 7, wherein the first input (110) is generated by a contact avoidance program.

12. The method of claim 6 or 7, wherein the first input (110) is generated by a preventative maintenance program.

13. The method of any of the claims 6 to 12, wherein the first input (110) is delivered by a vehicle transmitter (70) connected to a vehicle (26), such as a forklift or a hand truck.

14. The method of claim 13, wherein the fourth input (122) is delivered to a vehicle receiver connected to the vehicle (26).

15. The method of claim 14, wherein the fourth input (122) directs the vehicle (26) to enable the driving of the vehicle (26).
